# EUROPÄISCHE PATENTSCHRIFT

(11) **EP 4 126 630 B1**
(45) Veröffentlichungstag und Bekanntmachung des Hinweises auf die Patenterteilung: **25.12.2024**
(21) Anmeldenummer: 21709390.5
(22) Anmeldetag: 01.03.2021
(51) Int. Cl.: B61H 15/00, F16D 65/18, F16D 65/56

(54) **BETRIEBSBREMSZYLINDER MIT BREMSZUSTANDSERFASSUNG UND VERFAHREN ZUM ERFASSEN EINES BREMSZUSTANDS EINES BETRIEBSBREMSZYLINDERS**
SERVICE BRAKE CYLINDER COMPRISING A DEVICE FOR SENSING A STATE OF A BRAKE, AND METHOD FOR SENSING A STATE OF A SERVICE BRAKE CYLINDER
CYLINDRE DE FREIN A SERVICE COMPRENANT UN DISPOSITIF DE DETECTION D'UN ETAT D'UN FREIN ET METHODE DE DETECTION D'UN ETAT D'UN CYLINDRE DE FREIN A SERVICE

(30) Priorität: 23.03.2020 DE 102020107835
(43) Veröffentlichungstag der Anmeldung: 08.02.2023
(73) Patentinhaber: KNORR-BREMSE Systeme für Schienenfahrzeuge GmbH, 80809 München (DE)
(72) Erfinder: KATONA, Geza, 1191 Budapest (HU); ELSTORPFF, Marc-Gregory, 80368 München (DE); JENEI, Bela, 1042 Budapest (HU); VANCSAY, Gyorgy, 1182 Budapest (HU)
(86) Internationale Anmeldenummer: PCT/EP2021/055058
(87) Internationale Veröffentlichungsnummer: WO 2021/190866

(56) Entgegenhaltungen:
- EP-A1- 2 520 817
- DE-B3- 102015 219 058

## Beschreibung

Die Erfindung betrifft einen Betriebsbremszylinder, insbesondere einer Klotzbremse, mit Bremszustandserfassung, insbesondere für ein Schienenfahrzeug, nach dem Oberbegriff des Anspruchs 1. Die Erfindung bezieht sich auch auf ein Verfahren zum Erfassen eines Bremszustands eines Betriebsbremszylinders, insbesondere einer Klotzbremse.

Eine Klotzbremse, die auch Laufflächenbremse genannt wird, wird bei Schienenfahrzeugen als Reibungsbremse in Güterfahrzeugen sehr häufig eingesetzt, da sie einfach aufgebaut ist und die Bremsklötze mit ihrem Reibbelag die Radlauffläche des abzubremsenden Rades als Reibfläche benutzen.

Bei einer solchen Laufflächenbremse verschleißen Bremsklötze und Räder während des täglichen Betriebs. Der Zustand der Bremse, d.h. der Bremsklötze, muss aus Sicherheitsgründen regelmäßig überprüft werden. Das aktuelle Kontrollverfahren ist die regelmäßige Sichtkontrolle und Prüfen mit einem Werkzeug, z.B. Hammer, im angelegten und gelösten Zustand der Bremsklötze durch das Wartungspersonal. Das ist kostenintensiv und erfordert gut ausgebildetes Wartungspersonal.

Für eine Überprüfung der Bremse, ob diese auch während der Fahrt des Zuges nach einem Lösen tatsächlich gelöst ist und sich nach einem Anlegen auch in einem Anlagezustand befindet, sind unterschiedliche Lösungsvorschläge gemacht worden.

Das Dokument WO 2015/135074 A1 beschreibt eine Bremseinstellungs-Überwachungsvorrichtung für ein Druckluftbremssystem, welche einen berührungslosen Näherungssensor umfasst, der an einer Wand einer Bremskammer montiert ist, um ein Signal zu erzeugen, wenn die Rückplatte der Schubstange in den Erfassungsabstand des Näherungssensors kommt. Als nachteilig wird es dabei gesehen, dass der Näherungssensor durch eine in das Gehäuse der Bremskammer eingebrachte Öffnung mit einem Teil in die Bremskammer hervorsteht und mit einem anderen Teil, das einen elektrischen Anschluss mit Kabei aufweist, nach außen in die Umgebung hervorsteht und den Umgebungsbedingungen ausgesetzt ist.

Ähnliche Ausführungen sind in den folgenden Dokumenten beschrieben: DE102015219058A; DE19857092B4; EP1384638B1; EP1640233B1; US4583071A; US5816778A; US6352137B1; US6501375B1; US7624849B2; US8616342B2; US8662602B2 WO2015135074A1; WO2016040430A1.

Daher besteht die Aufgabe der Erfindung darin, einen gattungsgemäßen Betriebsbremszylinder, insbesondere einer Klotzbremse, mit einer verbesserten Bremszustandserfassung bei gleichzeitiger Reduzierung von Kosten und Bauteilen zu schaffen.

Die Aufgabe wird durch einen Betriebsbremszylinder mit den Merkmalen des Anspruchs 1 und ein Verfahren mit den Merkmalen des Anspruchs 6 gelöst.

Ein erfindungsgemäßer Betriebsbremszylinder, insbesondere einer Klotzbremse, umfasst ein Gehäuse mit einer Spindel und einer Bremszustands-Erfassungseinrichtung zur Erfassung eines Anlegezustands und eines Lösezustands des Betriebsbremszylinders. Die Bremszustands-Erfassungseinrichtung ist vollständig innerhalb eines Innenraums des Betriebsbremszylinders von dem Gehäuse umschlossen angeordnet und erfasst die Position der Spindel. Die Bremszustands-Erfassungseinrichtung liefert eine Information über die Kolbenposition. Eine solche Bremszustands-Erfassungseinrichtung ist vorteilhaft, nicht nur weil sie das Sicherheitsniveau gegenüber der derzeit etablierten manuellen Überprüfung erhöht, sondern auch einen einfachen Aufbau bietet.

Ein besonderer Vorteil ist es, dass die Bremszustands-Erfassungseinrichtung in dem Innenraum in dem Gehäuse des Betriebsbremszylinders vollständig von dem Gehäuse umgeben vor Witterungseinflüssen und Beschädigungen gut geschützt ist. Die Bremszustands-Erfassungseinrichtung ist im Wartungsfall von außen erreichbar, z.B. durch eine wieder verschließbare Wartungsöffnung. Ein erfindungsgemäßes Verfahren zum Erfassen eines Bremszustands des oben angegebenen Betriebsbremszylinders umfasst die Verfahrensschritte (V1) Bereitstellen einer Bremszustands-Erfassungseinrichtung und Anordnen der Bremszustands-Erfassungseinrichtung innerhalb des Betriebsbremszylinders und Versorgen mindestens eines Sensors der Bremszustands-Erfassungseinrichtung mit elektrischer Energie; (V2) Erzeugen mindestens eines elektrischen Signals als Bremszustandssignal in Abhängigkeit von einem Bremszustand, nämlich Anlegezustand und/oder Lösezustand, durch den Sensor; und (V3) Ausgeben eines erfassten Bremszustands als Anlegezustand oder Lösezustand des Betriebsbremszylinders anhand der so erfassten Bremszustandssignale.

Es ist von Vorteil, dass die erfassten Zustände, also Anlegezustand und Lösezustand in einfacher Weise mittels der Bremszustands-Erfassungseinrichtung objektive und für eine automatische Verarbeitung geeignete Daten liefern. Zusätzlich kann der Bediener die Daten zur Überwachung des Löse- oder Bremsbetätigungszustandes der Bremse verwenden.

Ein besonderer Vorteil besteht darin, dass diese erfassten Daten in Tunneln (z.B.: U-Bahnen oder langen Zugtunneln) oder im automatischen/autonomen Betrieb unerlässlich sind, um eine fehlerhafte Bremsbetätigung zu vermeiden, die in einem nicht gut belüfteten Bereich zu unerwartetem Rauch führen kann. Zudem können somit mögliche Brandherde früh genug erkannt und verhindert werden.

Vorteilhafte Weiterbildungen der Erfindung sind durch die Gegenstände der Unteransprüche angegeben.

Gemäß der Erfindung, erfasst die Bremszustands-Erfassungseinrichtung die Position eines Druckrings oder eines Spindelgehäuses, welche mit der Spindel verbunden sind. So können vorteilhaft bereits vorhandene Funktionsbauteile oder deren Abschnitte direkt oder indirekt zur Erfassung der Position der Spindel und somit des Zustands des Betriebsbremszylinders verwendet werden.

Gemäß der Erfindung, weist die Bremszustands-Erfassungseinrichtung mindestens einen Sensor auf, der in einem Innenraumabschnitt des Gehäuses des Betriebsbremszylinders zwischen einer Frontwand und einem Vorsprung des Spindelgehäuses angeordnet ist. In diesem Bereich sind vorteilhaft keine anderen störenden Bauteile wie z.B. ihre Lage oder/und Form verändernde Federn vorhanden, die beim Erfassen einer Position der Spindel zu Fehlern führen könnten.

In einer weiteren Ausführung ist der mindestens eine Sensor mittels eines Befestigungsabschnitts an einer Halterung befestigt, wobei eine axiale Position des mindestens einen Sensors an der Halterung einstellbar ist. Dies ist von Vorteil, da einerseits mittels der Halterung eine einfache Anordnung und Befestigung gewährleistet wird, und andererseits damit eine Position des Sensors in Zusammenwirkung mit dem Teil, dessen Position zu erfassen ist, einfach zu justieren ist.

Die Halterung kann auch so ausgebildet sein, dass sie mehr als einen Sensor aufnehmen kann. Dies ist vorteilhaft, wenn ein weiterer Sensor zu Plausibilisierung verwendet wird.

In einer noch weiteren Ausführung wirkt der mindestens eine Sensor mit dem Vorsprung des Spindelgehäuses derart zusammen, dass der mindestens eine Sensor in Abhängigkeit von der Position des Vorsprungs des Spindelgehäuses im Anlegezustand (A) des Betriebsbremszylinders aktiviert ist und im Lösezustand (L) des Betriebsbremszylinders nicht aktiviert ist. Dies ergibt einen einfachen Aufbau mit geringer Teilezahl.

Eine Ausführung sieht vor, dass der mindestens eine Sensor als ein induktiver Näherungssensor oder Näherungsschalter ausgebildet ist. Derartige Bauteile sind kostengünstig in hoher Qualität am Markt in passender Ausführung verfügbar.

Alternativ oder als zusätzlicher Sensor kann der mindestens eine Sensor ein kontaktbehafteter oder/und kontaktloser Sensor sein.

Bei dem erfindungsgemäßen Verfahren wird in dem Verfahrensschritt (V2) das von dem mindestens einen Sensor erzeugte mindestens eine Bremszustandssignal anhand mindestens eines weiteren von mindestens einem weiteren Sensor erzeugten Bremszustandssignals plausibilisiert. Dieser weitere Sensor kann z.B. an der gleichen Halterung angebracht sein. Es ist aber auch möglich, dass der weitere Sensor auch im Gehäuse des Betriebsbremszylinders an einer anderen Stelle angeordnet ist und den Lösezustand erfasst, wobei der erste Sensor den Anlegezustand erfasst.

Eine noch weitere Ausführung des erfindungsgemäßen Verfahrens sieht vor, dass als Anlegezustand (A) oder Lösezustand (L) des Betriebsbremszylinders im Verfahrensschritt (V3) ausgegebenen Bremszustände (A, L) mit Signalen zum Anlegen und/oder Lösen des Betriebsbremszylinders einer übergeordneten Bremssteuerung überprüft werden, und ein Alarm ausgegeben wird, wenn nach Erhalt eines Signals zum Anlegen des Betriebsbremszylinders kein Anlegezustand (A) erfasst wird, oder/und wenn nach Erhalt eines Signals zum Lösen des Betriebsbremszylinders kein Lösezustand (L) erfasst wird. Dies ist von Vorteil, da auf diese Weise eine einfache und wirkungsvolle Erfassung von nicht gelösten Bremsklötzen im Lösezustand und von nicht angelegten Bremsklötzen im Anlegezustand ermöglicht werden kann.

Ein Ausführungsbeispiel der Erfindung wird nachfolgend anhand der beigefügten Zeichnungen beschrieben.

Es zeigen:
- Figur 1: eine schematische Schnittdarstellung Ausführungsbeispiel eines erfindungsgemäßen Betriebsbremszylinders mit einer Bremszustand-Erfassungseinrichtung; und
- Figur 2-3: schematische Flussdiagramme erfindungsgemäßer Verfahren zum Erfassen eines Bremszustands eines Betriebsbremszylinders nach Figur 1.

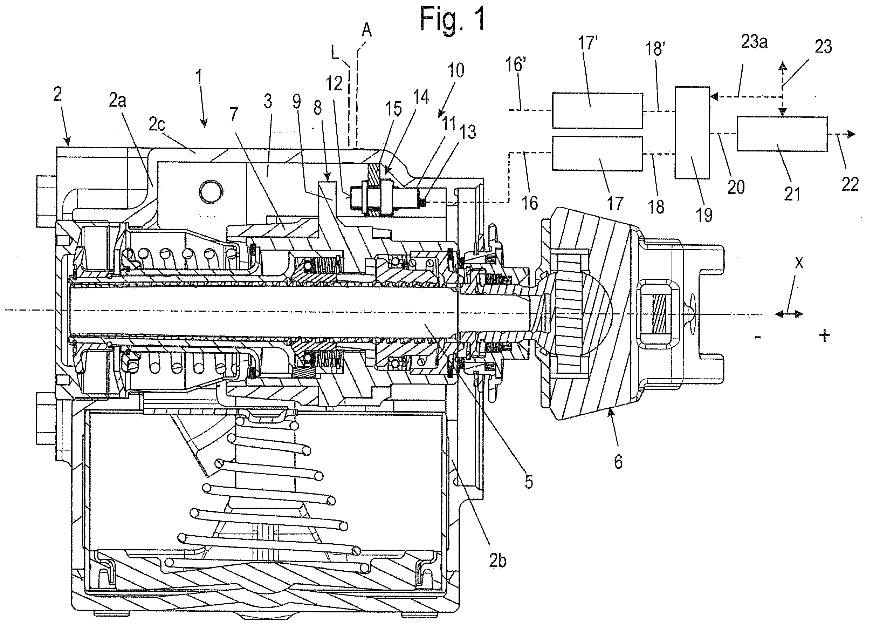

**Figur 1** zeigt eine schematische Schnittdarstellung eines erfindungsgemäßen Betriebsbremszylinders 1 mit einer Bremszustand-Erfassungseinrichtung 10.

Der Betriebsbremszylinder 1 ist in diesem Beispiel als Betriebsbremszylinder 1 einer so genannten Klotzbremse ausgebildet, die auch als Laufflächenbremse bezeichnet wird. In einer anderen Ausführung ist die Bremsvorrichtung 1 eine Scheibenbremse, was hier nicht dargestellt aber vorstellbar ist.

Der Betriebsbremszylinder 1 umfasst ein Gehäuse 2, eine Spindel 5, einen Druckring 7 und ein Spindelgehäuse 8. Der allgemein bekannte Aufbau, die Funktion des Betriebsbremszylinders 4 und das Zusammenwirken mit Bremsgestänge, Bremszangen oder/und Bremsklötzen werden hier nicht weiter im Detail beschrieben.

Das Gehäuse 2 des Betriebsbremszylinders 1 weist eine Rückwand 2a und eine dieser gegenüberliegende Frontwand 2b auf. Eine umlaufende Gehäusewand 2c verbindet die geschlossene Rückwand 2a und die Frontwand 2b. Ein Innenraum 3 des Gehäuses 2 ist durch die Rückwand 2a, die Frontwand 2b und die Gehäusewand 2c festgelegt.

In dem Innenraum 3 des Gehäuses 2 des Betriebsbremszylinders 1 ist die Spindel 5 zwischen der Rückwand 2a und der Frontwand 2b in einer Bewegungsrichtung x, welche in Spindel 5 verläuft, verschiebbar angeordnet. Die Spindel 5 ist mit einem nicht bezeichneten Betriebsbremskolben verbunden, wobei ein Bremsklotzschuh 6 an einem durch die Frontwand 2b hervorstehenden Ende der Spindel 5 angebracht ist. Der Bremsklotzschuh 6 ist mit einem nicht gezeigten Bremsbelag/Bremsklotz verbunden. Der Bremsbelag steht mit einem ebenfalls nicht gezeigten, aber leicht vorzustellenden, abzubremsenden Rad bei Bremsvorgängen in Zusammenwirkung.

In einem mittleren Abschnitt der Spindel 5 sind hier der Druckring 7 und das Spindelgehäuse 8 um die Spindel 5 herum angeordnet und mit ihr in nicht näher beschriebener Weise gekoppelt. Das Spindelgehäuse 8 weist einen radialen Vorsprung 9 in Form eines Flanschabschnitts auf. Dieser Vorsprung 9 legt einen Abschnitt des Innenraums 3 zwischen sich, der Frontwand 2b, Gehäusewand 2c und eine Außenseite des Spindelgehäuses 8 fest.

Die Bremse, d.h. der Betriebsbremszylinder 1, hat zwei Grundzustände, nämlich den Anlegezustand A und den Lösezustand L.

In dem Lösezustand L, welcher in Fig. 1 dargestellt ist, wird ein bestimmter Abstand zwischen dem abzubremsenden Rad und dem Bremsklotz/Bremsbelag durch die Stellung der Spindel 5 eingehalten. Dabei ist die Spindel 5 in das Gehäuse 2 eingefahren.

Wenn die Bremse angelegt bzw. zugespannt wird, bewegt sich die Spindel 5 in dem Betriebsbremszylinder 1 zusammen mit dem Druckring 7 und dem Spindelgehäuse 8 in Richtung der Spindel 5 in positiver Bewegungsrichtung x, und somit wird auch der Bremsklotz/Bremsbelag auf das abzubremsende Rad für einen Bremsvorgang gepresst. Dabei wird ein Abstand zwischen dem Vorsprung 9 des Spindelgehäuses 8 und der Rückwand 2a des Gehäuses 2 des Betriebsbremszylinders 2 vergrößert. Gleichzeitig wird ein Abstand zwischen dem Vorsprung 9 des Spindelgehäuses 8 und der Frontwand 2a des Gehäuses 2 verkleinert. Am Ende dieser Anlege- bzw. Zuspannbewegung nimmt die Bremse bzw. der Betriebsbremszylinder 1 den Anlegezustand A ein. Dabei ist die Spindel 5 mit ihrem mit dem Bremsklotzschuh 6 verbundenen Ende aus dem Gehäuse 2 um ein bestimmtes Maß herausgefahren.

Beim Lösen der Bremse verläuft die Bewegung umgekehrt in negativer Bewegungsrichtung x. Dabei nähert sich das Spindelgehäuse 8 der Rückwand 2a des Gehäuses 2. Die Bremse bzw. der Betriebsbremszylinder 1 befindet sich nach dem Lösen in dem Lösezustand L.

Diese beiden Zustände der Bremse bzw. des Betriebsbremszylinders 1, nämlich der Lösezustand L und der Anlegezustand A, können mit der Bremszustands-Erfassungseinrichtung 10 erfasst werden.

Die Anordnung der Bremszustands-Erfassungseinrichtung 10 ist so gewählt, dass die Bremszustands-Erfassungseinrichtung 10 mit einem in Richtung der Spindel 5 bewegbaren Bauteil zusammenwirken kann, um entweder den Lösezustand L, den Anlegezustand A oder beide Zustände zu erfassen.

In dem gezeigten Ausführungsbeispiel ist ein geeignetes Bauteil zur Überwachung der beiden Zustände (Lösezustand L und Anlegezustand A) der Druckring 7 oder/und das Spindelgehäuse 8, da diese Bauteile mit der Bewegung der Spindel 5 beim Anlegen und Lösen der Bremse mitbewegt werden.

Die Bremszustands-Erfassungseinrichtung 10 umfasst hier einen Sensor 11 innerhalb des Gehäuses 2 des Betriebsbremszylinders 2 in dem Innenraum 3.

Die Bremszustands-Erfassungseinrichtung 10 ist hier in dem Innenraum 3 des Gehäuses 2 innerhalb des Gehäuses 2 des Betriebsbremszylinders 1 angeordnet. Der Sensor 11 ist hier zwischen der Frontwand 2b und dem Vorsprung 9 des Spindelgehäuses 8 in dem Innenraum 3 an einer Halterung 15 befestigt.

Alternativ kann der Sensor 11 oder auch ein zusätzlicher Sensor 11 in einem anderen Abschnitt in dem Innenraum 3 innerhalb des Gehäuses 2 zwischen der Rückwand 2a und dem Vorsprung 9 des Spindelgehäuses 8 angeordnet sein.

In diesem Ausführungsbeispiel ist der Sensor 11 als ein induktiver Näherungssensor oder induktiver Näherungsschalter ausgebildet, welcher mit dem metallischen Vorsprung 9 des Spindelgehäuses 8 derart zusammenwirkt, dass der Sensor 11 in Abhängigkeit von der Position des Vorsprungs 9 des Spindelgehäuses 8 im Anlegezustand A aktiviert ist und im Lösezustand L nicht aktiviert ist.

Der Sensor weist eine Erfassungsseite 12, einen Anschlussabschnitt 13 und einen Befestigungsabschnitt 14 auf. Im eingebauten Zustand weist die Erfassungsseite 12 zu dem Vorsprung 9 des Spindelgehäuses 8. Der Anschlussabschnitt 13 dient zum elektrischen Anschluss des Sensors 11 und weist eine entsprechende IP-Schutzart gegen Eindringen von Feuchtigkeit und Schmutz mit z.B. einem schon dicht eingeführten/eingespritzten Kabel auf.

Wenn die Bremse angelegt bzw. zugespannt wird, bewegt sich das Spindelgehäuse 8 mit dem Vorsprung 9 in positiver Bewegungsrichtung +X auf die Erfassungsseite 12 des Sensors 11 zu. Wenn der Anlegezustand A eingenommen wird, wird ein sensorspezifischer Abstandswert des Vorsprungs 9 (in Richtung der Spindel 5) zu der Erfassungsseite 12 des Sensors 11 unterschritten und der Sensor 11 aktiviert. Dieser sensorspezifische Abstandswert bzw. Aktivbereich des Sensors 11 kann vorher festgelegt werden, z.B. am Sensor 11 oder/und mittels eines Steuergerätes 17.

Beim Lösen der Bremse wird der Sensor 11 deaktiviert, sobald der sensorspezifische Abstandswert zwischen Vorsprung 9 und Erfassungsseite 12 des Sensors 11 überschritten wird, d.h. wenn der Vorsprung 9 den Aktivbereich des Sensors 11 verlässt.

Der Befestigungsabschnitt 14 des Sensors 11 ermöglicht eine Positionsanpassung des Sensors 11 in einem bestimmten Bereich in der Halterung 15, z.B. in einem axialen Bereich parallel zu Spindel 5. Damit kann der Aktivbereich des Sensors 11 an die Position des Vorsprungs 9 angepasst werden.

Auf diese Weise ist es möglich, den Anlegezustand A durch den aktivierten Sensor 11 genau zu erfassen. Wenn der Sensor 11 dann deaktiviert wird und deaktiviert ist, kann der Lösezustand L eingenommen sein. Der Lösezustand L kann dabei jedoch nur angenommen werden, da keine Plausibilisierung vorhanden ist.

Eine solche Plausibilisierung des Lösezustands L kann beispielsweise durch Erfassung der Position des Vorsprungs 9 in dem Lösezustand L durch einen weiteren Sensor 11 erfolgen. Dieser weitere Sensor 11 erfasst dann den Lösezustand L, indem der weitere Sensor 11 aktiviert ist.

In einer solchen Ausführung, die nicht gezeigt aber leicht vorstellbar ist, sind zwei Sensoren 11 so in dem Innenraum 3 des Gehäuses 2 angeordnet, dass der eine von den zwei Sensoren 11 den Lösezustand L und der andere von den zwei Sensoren 11 den Anlegezustand A erfasst.

Der Sensor 11 ist mit einer elektrisch leitenden Anschlussleitung 16 mit einem Steuergerät 17 verbunden. Das Steuergerät 17 versorgt den Sensor 11 über die Anschlussleitung 16 mit elektrischer Energie und empfängt Signale des Sensors 11 als Bremszustandssignale. Die Signale des Sensors 11 entsprechen dem jeweiligen Bremszustand des Betriebsbremszylinders 1, nämlich dem Lösezustand L und dem Anlegezustand A, und können von dem Steuergerät 17 weiterbearbeitet, wie z.B. verstärkt, geformt usw., werden. Diese Bremszustandssignale sind im einfachsten Fall als digitale Schaltsignale ("EIN", "AUS"), d.h. der eine Zustand wird durch das Vorhandensein einer Amplitude eines Signals, z.B. eines Spannungs- oder Stromwertes dargestellt, und der andere Zustand durch das Nichtvorhandensein einer Amplitude eines Signals, z.B. eines Spannungs- oder Stromwertes. Zwischenwerte sind nicht erforderlich. Natürlich können die beiden Zustände auch durch unterschiedliche elektrische Spannungen oder/und Ströme, Widerstände, Frequenzen o.dgl. dargestellt werden.

Dann erfolgt eine Weiterleitung über eine Verbindung 18 über ein weiteres Steuergerät 19 mittels einer weiteren elektrisch leitenden Verbindung 20 an eine Auswerteeinheit 21.

Die Auswerteeinheit 21 gibt an einem Ausgang 22 z.B. ein Ausgangsignal als Anzeige des Bremszustands A, L optisch, akustisch, haptisch aus. Beispielsweise kann eine Bildschirmanzeige eines gesamten Bremssystems eines Zuges erfolgen, wobei der Bremszustand eines jeden Betriebsbremszylinders 1 übersichtlich dargestellt wird. Das Ausgangssignal kann auch gespeichert oder anderweitig weiterverarbeitet werden.

Die Auswerteeinheit 21 ist zudem über eine Verbindung 23 mit einer übergeordneten Bremssteuerung (nicht gezeigt) verbunden, von der die Auswerteeinheit 21 Bremsanlege- und -lösesignale erhält, um diese mit den jeweiligen erfassten Bremszuständen der Betriebsbremszylinder 1 zu vergleichen. Natürlich können auch andere Daten ausgetauscht werden.

in der Figur 1 ist ein weiteres Steuergerät 17' mit einer Anschlussleitung 16' für einen weiteren Sensor 11 (nicht gezeigt) und einer Verbindung 18' angegeben. Dieser weitere Sensor 11 kann z.B. als zweiter, redundanter Sensor 11 in dem Betriebsbremszylinder 1 angeordnet sein. Es können auch mehr zwei solche Sensoren 11 vorgesehen sein.

Zudem soll das weitere Steuergerät 17' stellvertretend für eine Anzahl von Steuergeräten 17 stehen, die für ein komplettes Bremssystem eines Zuges, dem die Betriebsbremszylinder 1 zugeordnet sind, mit einer Anzahl von Betriebsbremszylindern 1 mit jeweiliger Bremszustands-Erfassungseinrichtung 10 mit entsprechenden Bremszustandssignalen erforderlich sind. Diese Anzahl von Bremszustandssignalen des gesamten Bremssystems wird in dem weiteren Steuergerät 19, z.B. auch im Zusammenhang mit Daten aus der übergeordneten Bremssteuerung über eine weitere Verbindung 23a, für eine einfache und schnelle Auswertung in der Auswerteeinheit 21 vorbereitet.

Der Sensor 11 kann ein kontaktbehafteter oder/und kontaktloser Sensor 11 sein.

Der Sensor 11 ist in dem Innenraum 3 in dem Gehäuse 2 des Betriebsbremszylinders 1 vor Witterungseinflüssen und Beschädigungen gut geschützt. Der Sensor 11 ist im Wartungsfall von außen erreichbar, z.B. durch eine wieder verschließbare Wartungsöffnung.

Form und Werkstoffe des Sensors 11 sind so bemessen, dass die Effizienz des Sensors 11 maximiert werden kann. Dazu sind bestimmte Kunststoffe als Gehäuse verwendbar, welche gegenüber den im Betriebsbremszylinder 1 vorkommenden Medien, wie z.B. Schmierstoff, resistent sind. Außerdem können geeignete metallische Abschirmungen des Sensors 11 dessen elektromagnetische Verträglichkeit gegenüber Einstrahlung von Störsignalen verbessern.

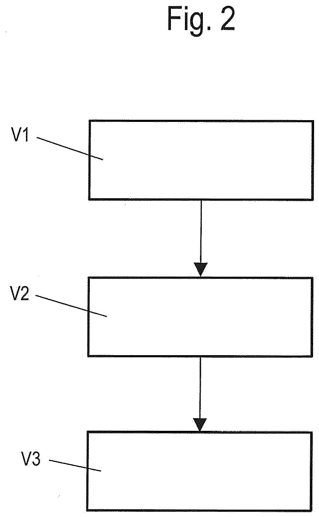

**Figur 2** ein schematisches Flussdiagramm eines erfindungsgemäßen Verfahrens zum Erfassen eines Bremszustands eines Betriebsbremszylinders 1 nach Figur 1 dar.

In einem ersten Verfahrensschritt V1 wird eine Bremszustands-Erfassungseinrichtung 10 in einem Betriebsbremszylinder 1 bereitgestellt. Ein Sensor 11 der Bremszustands-Erfassungseinrichtung 10 wird mit elektrischer Energie versorgt.

Dann werden in einem zweiten Verfahrensschritt V2 elektrische Signale des Sensors 11 als Bremszustandssignale in Abhängigkeit von einem Bremszustand, nämlich Anlegezustand A und Lösezustand L, von dem Sensor 11 erzeugt.

In einem dritten Verfahrensschritt V3 werden die so erhaltenen Bremszustandssignale als erfasster Bremszustand Anlegezustand A oder Lösezustand L ausgegeben.

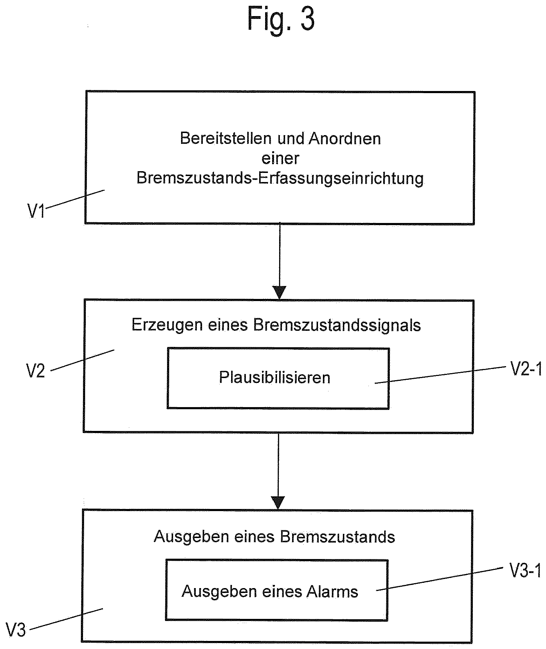

**Figur 3** zeigt ein schematisches Flussdiagramm eines weiteren erfindungsgemäßen Verfahrens zum Erfassen eines Bremszustands eines Betriebsbremszylinders 1 nach Figur 1.

Die Verfahrensschritte V1, V2 und V3 entsprechen denjenigen des Verfahrens nach Figur 2.

Zusätzlich werden hier in einem untergeordneten Verfahrensschritt V2-1 des zweiten Verfahrensschritts V2 die von dem Sensor 11 erzeugten Bremszustandssignale von mindestens einem weiteren Sensor 11 plausibilisiert.

In einem zusätzlichen untergeordneten Verfahrensschritt V3-1 des dritten Verfahrensschritts V3 werden die ausgegebenen Bremszustände A, L weiterhin mit Signalen zum Anlegen und/oder Lösen des Betriebsbremszylinders 1 einer übergeordneten Bremssteuerung überprüft, und ein Alarm ausgegeben, wenn nach Erhalt eines Signals zum Anlegen des Betriebsbremszylinders 1 kein Anlegezustand A erfasst wird, oder/und wenn nach Erhalt eines Signals zum Lösen des Betriebsbremszylinders 1 kein Lösezustand L erfasst wird.

Die Erfindung ist durch das oben angegebene Ausführungsbeispiel nicht eingeschränkt, sondern im Rahmen der Ansprüche modifizierbar.

So ist es z.B. denkbar, dass der Sensor 11 oder/und der/die redundante/n Sensorten 11 auf einem optischen Entfernungsmessprinzip, wie z.B. Reflexionslichtschranke, Laser, auf einem akustischen Entfernungsmessprinzip, wie z.B. Ultraschall, oder auf einem elektromagnetischem Entfernungsmessprinzip, wie z.B. Radar, beruht.

Die Verbindungen 18, 18', 20, 23, 23a können auch je nach Einsatzfall optische Leiter oder/und drahtlose Übertragungsstrecken sein.

### Bezugszeichenliste

- 1: Betriebsbremszylinder
- 2: Gehäuse
- 2a: Rückwand
- 2b: Frontwand
- 3: Innenraum
- 4: - entfällt -
- 5: Spindel
- 6: Bremsklotzschuh
- 7: Druckring
- 8: Spindelgehäuse
- 9: Vorsprung
- 10: Bremszustands-Erfassungseinrichtung
- 11: Sensor
- 12: Erfassungsseite
- 13: Anschlussabschnitt
- 14: Befestigungsabschnitt
- 15: Halterung
- 16, 16': Anschlussleitung
- 17, 17'; 19: Steuergerät
- 18, 18'; 20: Verbindung
- 21: Auswerteeinheit
- 22: Ausgang
- 23, 23a: Verbindung
- A: Anlegeposition/Anlegezustand
- L: Löseposition/Lösezustand
- V1 ...3; 2-1; 3-1: Verfahrensschritt
- x: Bewegungsrichtung

## Patentansprüche

1. Betriebsbremszylinder (1), insbesondere einer Klotzbremse, aufweisend ein Gehäuse (2) mit einer Spindel (5) und einer Bremszustands-Erfassungseinrichtung (10) zur Erfassung eines Anlegezustands (A) und eines Lösezustands (L) des Betriebsbremszylinders (1) angeordnet ist, wobei die Bremszustands-Erfassungseinrichtung (10) vollständig innerhalb eines Innenraums (3) des Betriebsbremszylinders (1) von dem Gehäuse (2) umschlossen angeordnet ist und die Position der Spindel (5) erfasst, wobei die Bremszustands-Erfassungseinrichtung (10) die Position eines Druckrings (7) oder eines Spindelgehäuses (8), welche mit der Spindel (5) verbunden sind, erfasst, wobei die Bremszustands-Erfassungseinrichtung (10) mindestens einen Sensor (11) aufweist, der in einem Innenraum (3) des Gehäuses (2) des Betriebsbremszylinders (2) zwischen einer Frontwand (2b) und einem Vorsprung (9) des Spindelgehäuses (8) angeordnet ist,
**dadurch gekennzeichnet, dass** ein weiterer Sensor (11) in dem Innenraum (3) des Gehäuses (2) angeordnet ist, welcher mindestens ein Bremszustandssignals des mindestens einen Sensors (11) anhand mindestens eines weiteren von dem mindestens einem weiteren Sensor (11) erzeugten Bremszustandssignals plausibilisiert.

2. Betriebsbremszylinder (1) nach Anspruch 1, **dadurch gekennzeichnet, dass** der mindestens eine Sensor (11) mittels eines Befestigungsabschnitts (14) an einer Halterung (15) befestigt ist, wobei eine axiale Position des mindestens einen Sensors (11) an der Halterung (15) einstellbar ist.

3. Betriebsbremszylinder (1) nach Anspruch 1 oder 2, **dadurch gekennzeichnet, dass** der mindestens eine Sensor (11) mit dem Vorsprung (9) des Spindelgehäuses (8) derart zusammenwirkt, dass der mindestens eine Sensor (11) in Abhängigkeit von der Position des Vorsprungs (9) des Spindelgehäuses (8) im Anlegezustand (A) des Betriebsbremszylinders (1) aktiviert ist und im Lösezustand (L) des Betriebsbremszylinders (1) nicht aktiviert ist.

4. Betriebsbremszylinder (1), nach einem der Ansprüche 1 bis 3, **dadurch gekennzeichnet, dass** der mindestens eine Sensor (11) als ein induktiver Näherungssensor oder Näherungsschalter ausgebildet ist.

5. Betriebsbremszylinder (1) nach einem der Ansprüche 1 bis 4, **dadurch gekennzeichnet, dass** der mindestens eine Sensor (11) ein kontaktbehafteter oder/und kontaktloser Sensor (11) ist.

6. Verfahren zum Erfassen eines Bremszustands eines Betriebsbremszylinders (1) nach einem der vorhergehenden Ansprüche, mit den Verfahrensschritten
(V1) Bereitstellen einer Bremszustands-Erfassungseinrichtung (10) und Anordnen der Bremszustands-Erfassungseinrichtung (10) innerhalb des Betriebsbremszylinders (1) und Versorgen mindestens eines Sensors (11) der Bremszustands-Erfassungseinrichtung (10) mit elektrischer Energie;
(V2) Erzeugen mindestens eines elektrischen Signals als Bremszustands-signal in Abhängigkeit von einem Bremszustand, nämlich Anlegezustand (A) und/oder Lösezustand (L), durch den Sensor (11); und
(V3) Ausgeben eines erfassten Bremszustands als Anlegezustand (A) oder Lösezustand (L) des Betriebsbremszylinders (1) anhand der so erfassten Bremszustandssignale,
**dadurch gekennzeichnet, dass** in dem Verfahrensschritt (V2) das von dem mindestens einen Sensor (11) erzeugte mindestens eine Bremszustandssignal anhand mindestens eines weiteren von mindestens einem weiteren Sensor (11) erzeugten Bremszustandssignals in einem untergeordneten Verfahrensschritt (V2-1) plausibilisiert wird.

7. Verfahren nach Anspruch 6, **dadurch gekennzeichnet, dass** die als Anlegezustand (A) oder Lösezustand (L) des Betriebsbremszylinders (1) im Verfahrensschritt (V3) ausgegebenen Bremszustände (A, L) in einem untergeordneten Verfahrensschritt (V3-1) mit Signalen zum Anlegen und/oder Lösen des Betriebsbremszylinders (1) einer übergeordneten Bremssteuerung überprüft werden, und ein Alarm ausgegeben wird, wenn nach Erhalt eines Signals zum Anlegen des Betriebsbremszylinders (1) kein Anlegezustand (A) erfasst wird, oder/und wenn nach Erhalt eines Signals zum Lösen des Betriebsbremszylinders (1) kein Lösezustand (L) erfasst wird.

## Claims

1. Service brake cylinder (1), in particular of a block brake, having a housing (2) with a spindle (5) and a brake state detection apparatus (10) for detecting an applied state (A) and a released state (L) of the service brake cylinder (1), wherein the brake state detection apparatus (10) is arranged completely enclosed within an interior space (3) of the service brake cylinder (1) by the housing (2) and detects the position of the spindle (5), wherein the brake state detection apparatus (10) detects the position of a pressure ring (7) or a spindle housing (8), which are connected to the spindle (5), wherein the brake state detection device (10) has at least one sensor (11), which is arranged in an interior space (3) of the housing (2) of the service brake cylinder (2) between a front wall (2b) and a projection (9) of the spindle housing (8),
**characterised in that** a further sensor (11) is arranged in the interior space (3) of the housing (2), which validates the plausibility of at least one brake state signal of the at least one sensor (11) with the aid of at least one further brake state signal generated by the at least one further sensor (11).

2. Service brake cylinder (1) according to claim 1, **characterised in that** the at least one sensor (11) is attached by means of a fastening section (14) to a bracket (15), wherein an axial position of the at least one sensor (11) is adjustable on the bracket (15).

3. Service brake cylinder (1) according to claim 1 or 2, **characterised in that** the at least one sensor (11) interacts with the projection (9) of the spindle housing (8) such that the at least one sensor (11) is activated depending on the position of the projection (9) of the spindle housing (8) in the applied state (A) of the service brake cylinder (1) and is not activated in the released state (L) of the service brake cylinder (1).

4. Service brake cylinder (1), according to any one of claims 1 to 3, **characterised in that** the at least one sensor (11) is configured as an inductive proximity sensor or proximity switch.

5. Service brake cylinder (1) according to any one.of claims 1 to 4, **characterised in that** the at least one sensor (11) is a contact and/or contactless sensor (11).

6. Method for detecting a brake state of a service brake cylinder (1) according to any one of the preceding claims, with the method steps of
(V1) providing a brake state detection apparatus (10) and arranging the brake state detection apparatus (10) within the service brake cylinder (1) and supplying at least one sensor (11) of the brake state detection apparatus (10) with electric power,
(V2) generating at least one electrical signal as a brake state signal depending on a brake state, namely an applied state (A) and/or released state (L), by the sensor (11), and
(V3) outputting a detected brake state as an applied state (A) or released state (L) of the service brake cylinder (1) with the aid of the brake state signal detected in this way,
**characterised in that**
in the method step (V2), the at least one brake state signal generated by the at least one sensor (11) is validated for plausibility with the aid of at least one further brake state signal generated by at least one further sensor (11) in a secondary method step (V2-1).

7. Method according to claim 6, **characterised in that** the brake states (A, L) outputted as an applied state (A) or released state (L) of the service brake cylinder (1) in the method step (V3) are checked in a secondary method step (V3-1) with signals for applying and/or releasing the service brake cylinder (1) of a secondary brake control, and an alarm is output if, after receiving a signal to apply the service brake cylinder (1), an applied state (A) is not detected, or/and if, after receiving a signal to receive the service brake cylinder (1), a released state (L) is not detected.

## Revendications

1. Cylindre de frein de service (1), en particulier d'un frein à sabot, présentant un boîtier (2) avec une broche (5) et un dispositif de détection d'état de freinage (10) pour la détection d'un état actionné (A) et d'un état desserré (L) du cylindre de frein de service (1), dans lequel le dispositif de détection d'état de freinage (10) est agencé entouré par le boîtier (2) entièrement à l'intérieur d'un espace intérieur (3) du cylindre de frein de service (1) et détecte la position de la broche (5), dans lequel le dispositif de détection d'état de freinage (10) détecte la position d'une bague de pression (7) ou d'un boîtier de broche (8) qui sont reliés à la broche (5), dans lequel le dispositif de détection d'état de freinage (10) présente au moins un capteur (11) qui est agencé dans un espace intérieur (3) du boîtier (2) du cylindre de frein de service (2) entre une paroi avant (2b) et une saillie (9) du boîtier de broche (8),
**caractérisé en ce qu'**un autre capteur (11) est agencé dans l'espace intérieur (3) du boîtier (2), capteur qui rend plausible au moins un signal d'état de freinage de l'au moins un capteur (11) à l'aide d'au moins un autre signal d'état de freinage généré par le au moins un autre capteur (11).

2. Cylindre de frein de service (1) selon la revendication 1, **caractérisé en ce que** le au moins un capteur (11) est fixé au moyen d'une section de fixation (14) à un support (15), dans lequel une position axiale de l'au moins un capteur (11) est réglable au niveau du support (15).

3. Cylindre de frein de service (1) selon la revendication 1 ou 2, **caractérisé en ce que** le au moins un capteur (11) interagit avec la saillie (9) du boîtier de broche (8) de telle manière que le au moins un capteur (11) soit activé en fonction de la position de la saillie (9) du boîtier de broche (8) dans l'état actionné (A) du cylindre de frein de service (1) et ne soit pas activé dans l'état desserré (L) du cylindre de frein de service (1).

4. Cylindre de frein de service (1) selon l'une quelconque des revendications 1 à 3, **caractérisé en ce que** le au moins un capteur (11) est réalisé comme un capteur de proximité ou commutateur de proximité inductif.

5. Cylindre de frein de service (1) selon l'une quelconque des revendications 1 à 4, **caractérisé en ce que** le au moins un capteur (11) est un capteur (11) à contact et/ou sans contact.

6. Procédé de détection d'un état de freinage d'un cylindre de frein de service (1) selon l'une quelconque des revendications précédentes, avec les étapes de procédé suivantes
(V1) fourniture d'un dispositif de détection d'état de freinage (10) et agencement du dispositif de détection d'état de freinage (10) à l'intérieur du cylindre de frein de service (1) et l'alimentation d'au moins un capteur (11) du dispositif de détection d'état de freinage (10) en énergie électrique ;
(V2) génération d'au moins un signal électrique comme signal d'état de freinage en fonction d'un état de freinage, à savoir un état actionné (A) et/ou état desserré (L), par le capteur(11) ; et
(V3) émission d'un état de freinage détecté comme état actionné (A) ou état desserré (L) du cylindre de frein de service (1) à l'aide des signaux d'état de freinage ainsi détectés,
**caractérisé en ce que**
dans l'étape de procédé (V2), le au moins un signal d'état de freinage généré par le au moins un capteur (11) est rendu plausible à l'aide d'au moins un autre signal d'état de freinage généré par au moins un autre capteur (11) dans une étape de procédé (V2-1) secondaire.

7. Procédé selon la revendication 6, **caractérisé en ce que** les états de freinage (A, L) émis comme état actionné (A) ou état desserré (L) du cylindre de frein de service (1) dans l'étape de procédé (V3) sont vérifiés dans une étape de procédé (V3-1) secondaire avec des signaux pour l'actionnement et/ou le desserrage du cylindre de frein de service (1) d'une commande de freinage supérieure, et une alarme est émise lorsqu'après réception d'un signal pour l'actionnement du cylindre de frein de service (1), aucun état actionné (A) n'est détecté et/ou lorsqu'après réception d'un signal pour le desserrage du cylindre de frein de service (1), aucun état desserré (L) n'est détecté.
